(19) Europäisches Patentamt
European Patent Office
Office européen des brevets

(11) Publication number: **0 166 520 B1**

# (12) EUROPEAN PATENT SPECIFICATION

(45) Date of publication of patent specification: **27.02.91**

(51) Int. Cl.[5]: **C01B 25/45**, C01B 35/14, C01B 33/34, B01J 29/04

(21) Application number: **85303517.8**

(22) Date of filing: **20.05.85**

## (54) Metallophosphoaluminates and their synthesis.

(30) Priority: **30.05.84 US 615391**
**30.05.84 US 615484**
**30.05.84 US 615496**
**30.05.84 US 615495**
**30.05.84 US 615482**
**30.05.84 US 615488**
**01.04.85 US 718326**
**01.04.85 US 718325**
**01.04.85 US 718269**

(43) Date of publication of application:
**02.01.86 Bulletin 86/01**

(45) Publication of the grant of the patent:
**27.02.91 Bulletin 91/09**

(84) Designated Contracting States:
**AT BE DE FR GB IT NL SE**

(56) References cited:
**EP-A- 0 043 562**
**EP-A- 0 103 117**
**EP-A- 0 158 976**

(73) Proprietor: **MOBIL OIL CORPORATION**
**150 East 42nd Street**
**New York New York 10017(US)**

(72) Inventor: **Von Ballmoos, Roland**
**Box 144, Route 518**
**Hopewell, N.J. 08525(US)**
Inventor: **Derouane, Eric Gerard**
**56 Rue des Champs Verts**
**B-5020 Namur (Champion)(BE)**

(74) Representative: **Carpmael, John William Maurice et al**
**CARPMAELS & RANSFORD 43 Bloomsbury Square**
**London, WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to synthetic crystalline metallophosphoaluminates and a method of their synthesis.

Aluminum phosphates are disclosed in, for example, U.S. Patents 4,310,440 and 4,385,994. Aluminum phosphate materials have electroneutral lattices and, therefore, are not useful as ion-exchange materials or as catalyst components. Microporous aluminum phosphates have a composition typified by:

$xR : Al_2O_3 : (1.0 \pm 0.2)\ P_2O_5 : yH_2O$

wherein R is an organic amine or quaternary ammonium salt entrapped within the aluminum phosphate and playing a role as crystallization template, and x and y represent the amounts of R and $H_2O$ needed to fill the microporous voids. Because the aluminum/phosphorus atomic ratio of these materials is about unity, they display virtually no ion-exchange properties, the framework positive charge on phosphorus being balanced by corresponding negative charge on aluminum:

$AlPO_4 = (AlO_2^-)\ (PO_2^+)$

An object of the present invention is to provide a novel series of crystalline metallophosphoaluminates, some of which have microporosity and catalytic activity, all of which exhibit ion-exchange properties and the ready ability for conversion to material having catalytic activity.

In one aspect, the invention resides in a crystalline metallophosphoaluminate having a composition, in the anhydrous state, as follows:

$$Q^{q+}_{i/q}:(AlO_2^-)_{1-x}:(PO_2^+)_{1-y}:(MO_2^{m-4})_{x+y}:T^{t-}_{j/t}$$

wherein Q is a cation of valence q, T is an anion of valence t and M is one or more elements other than aluminum or phosphorus of valence m selected from germanium, vanadium, antimony and boron or is a combination of said one or more elements and silicon, and x, y, i and j are numbers which satisfy the relationship:

$i-j = y-x + (4-m)(x+y),$

said metallophosphoaluminate having an ion exchange capacity of at least about 0.002 meq/g.

In a further aspect, the invention resides in a method for synthesis of crystalline metallophosphoaluminate characterized by a composition, in the anhydrous state, as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein A is an organic directing agent, v is the number of moles of A, Q is a cation of valence q, T is an anion of valence t and M is one or more elements other than aluminum or phosphorus of valence m selected from germanium, vanadium, antimony and boron or is a combination of said one or more elements and silicon, and x, y, i and j are numbers which satisfy the relationship:

$i-j = y-x + (4-m)(x+y),$

said metallophosphoaluminate having an ion exchange capacity of at least about 0.002 meq/g, which comprises:

preparing a reaction mixture comprising a liquid organic phase and a liquid aqueous phase, said reaction mixture comprising components or sources thereof in the following relationship:

$(A)_a:(Q_{2/q}O)_b:(Al_2O_3)_c:(P_2O_5)_d:(MO_{m/2})_e:(solvent)_f:(anion\ source)_g:(H_2O)_h$

wherein a, b, c, d, e, f, g and h are numbers satisfying the following relationships:

$a/(c+d+e)$ is less than 4,
$b/(c+d+e)$ is less than 2,
$e/(c+d)$ is less than 2,
$f/(c+d+e)$ is from 0.1 to 15,
$g/(c+d+e)$ is less than 2, and
$h/(c+d+e)$ is from 3 to 150;

wherein the solvent is a substantially water-immiscible organic solvent and wherein upon initial preparation of said reaction mixture the source of one of the $Al_2O_3$, $P_2O_5$ and $MO_{m/2}$ is dispersed or dissolved in the

organic phase,

heating the reaction mixture at a rate of from 5° C to 200° C per hour to a temperature of from 80° C to 300° C,

agitating the reaction mixture so as to intimately admix the organic and aqueous phases,

maintaining the agitated reaction mixture at said temperature of from 80° C to 300° C and a pH of from 2 to 9, and

recovering crystalline metallophosphoaluminate from the mixture.

The metallophosphoaluminate of the invention is characterized by a composition in which the number of atoms of aluminum and phosphorus, is greater than the number of atoms of non-aluminum metal plus any silicon, hereinafter more particularly defined and presented as "M", i.e. Al + P >M. The material is named a "metallophosphoaluminate" in view of its crystalline composition and the charge distribution on its framework tetrahedral T-sites. Its characteristic composition, in the anhydrous state and as synthesized, is as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein v is moles of A, occluded organic material resulting from organic directing agent used in synthesis of and filling microporous voids of the metallophosphoaluminate, which material may be removed upon calcination, Q is a cation of valence q, T is an anion of valence t, and M is one or more elements of valence m selected from the group consisting of Ge, V, Sb and B, combinations thereof and combinations with Si. Conveniently, more than one element M is present, in which case m represents the weighted average valence of M. In otherwords, with N being Ge, V, Sb or B and having a valence n; k being an index defining the element N; r being the amount of N; and s being the amount of any Si, then:

$M = \Sigma . r_k N_k + sSi$

with all $r_k$ and s satisfying the relationship $\Sigma\ r_k + s = 1$. It is understood that m is a weighted average of the valences of the elements $N_k$ ($n_k$+) and Si(+4), where:

$m = \Sigma\ r_k\ n_k + 4s$

The designations x, y, i and j are numbers which satisfy the following relationships relative to the number z:

$z = i-j$

$z = y-x+(4-m)(x+y)$

where z is a number of from greater than -1 to less than +1. When z is greater than 0, the metallophosphoaluminates mostly behave as cation exchangers with potential use as acidic catalysts. Such catalysts have an acid strength spectrum differing from that of aluminosilicate zeolites, which can be beneficial in some catalytic processes. For values of z lower than zero, anionic exchange properties prevail and render such materials active for base-catalyzed reactions. As these materials may contain transition metal ions as the M species, they may perform catalytically as other transition metal catalyst compositions known in the art. They also offer a new class of catalyst supports for metals and metal oxides and are particularly interesting in this respect because of their ion-exchange capacity. They will show in the latter case the same catalytic flexibility as other supported metal catalysts. Sorption properties indicate that microporous metallophosphoaluminates may be molecular shape selective and this can be advantageous in numerous catalytic processes as known in the art of zeolite catalysis.

In any event, the metallophosphoaluminate will exhibit an ion exchange capacity of at least about 0.002 meq/g.

The elements M are characterized by their oxidation number which vary from +2 to +5, and their ionic "Radius Ratio" which is defined as the ratio of the crystal ionic radius of the element M to the crystal ionic radius of the oxygen anion, $O^{-2}$.

$$\text{Radius Ratio} = \frac{\text{crystal ionic radius of the element M}}{\text{crystal ionic radius of } O^{-2}}$$

The crystal ionic radii of elements are listed in the CRC Handbook of Chemistry and Physics, 61st Edition, CRC Press, Inc., 1980, pages F-216 and F-217. In determining the Radius Ratio, it is necessary to use crystal ionic radii of the M atom and oxygen anion ($O^{-2}$) which have been measured by the same method.

Thus the elements (M) useful herein exhibit the following properties:

| M | Valence | Radius Ratio |
|---|---|---|
| B | +3 | 0.17 |
| Ge | +2 | 0.55 |
| Ge | +4 | 0.40 |
| Sb | +3 | 0.57 |
| V | +3 | 0.56 |
| V | +4 | 0.48 |
| V | +5 | 0.45 |

The composition of the metallophosphoaluminate, following removal of the organic component, for example by calcination, is the following:

$$Q^{q+}_{i/q}:(AlO_2^-)_{1-x}:(PO_2^+)_{1-y}:(MO_2^{m-4})_{x+y}:T^{t-}_{j/t}$$

As synthesized, in general, the present crystalline metallophosphoaluminates comprise structural aluminum, phosphorus and non-aluminum, non-phosphorus element M, and will exhibit a M/aluminum plus phosphorus atomic ratio of less than unity and greater than zero, and usually within the range of from 0.02 to 0.95. The phosphorus/ aluminum atomic ratio of such materials may be found to vary from 0.01 to 100.0, as synthesized. It is well recognized that aluminum phosphates exhibit a phosphorus/aluminum atomic ratio of unity, and no element M. Also, the phosphorus-substituted zeolite compositions, sometimes referred to as "aluminosilicophosphate" zeolites, have a silicon/aluminum atomic ratio of usually greater than unity, and generally from 0.66 to 8.0, and a phosphorus/aluminum atomic ratio of less than unity, and usually from 0 to 1.

By producing the present metallophosphoaluminates from a two-phase synthesis reaction mixture system, exclusive of the solids, it is possible to maintain in solution in the organic phase, one or more of the reactants which are normally insoluble or unstable in the aqueous phase under the present synthesis conditions. Such a procedure facilitates the preparation of the required metallophosphoaluminates. Further, microporous properties can be achieved for the crystalline metallophosphoaluminates by performing inorganic syntheses in the presence of the organic or inorganic directing agent(s). In addition to its templating role, the organic directing agent can also ace as a surfactant. It can help the codispersion of the organic and aqueous phases containing the reagents.

In the synthesis method of the present invention, the reaction mixture will contain sources of element M, phosphorus and aluminum, directing agent(s), and an organic solvent as defined above.

The overall molar composition of the two-phase synthesis mixture, in terms of oxides and organic components, is:

$(A)_a:(Q_{2/q}O)_b:(Al_2O_3)_c:(P_2O_5)_d:(MO_{m/2})_e:(solvent)_f:(anion\ source)_g:(H_2O)_h$

where a/(c+d+e) is less than 4, b/(c+d+e) and e/(c+d) are less than 2, f/(c+d+e) is from 0.1 to 15, g/(c+d+e) is less than 2, and h/(c+d+e) is from 3 to 150.

The reaction mixture is heated carefully at a rate of from 5° C to 200° C per hour up to a temperature of from 80° C to 300° C and maintained within this temperature range until crystals of desired metallophosphoaluminate form, usually from 5 hours to 500 hours. The pH of the reaction mixture during crystallization should be maintained at from 2 to 9. This may be accomplished by adjusting the concentration of the added bases.

Following crystallization of the desired metallophosphoaluminate, the reaction mixture containing same is filtered and the recovered crystals are washed, for example with water, and then dried, such as by heating at from 25° C to 150° C at atmospheric pressure.

Useful sources of aluminum include, as non-limiting examples, any known form of aluminum oxide or hydroxide, organic or inorganic salt and compound.

Useful sources of element M include, as non-limiting examples, any known form of non-aluminum, non-phosphorus element, e.g. metal, its oxide or hydroxide or salt, alkoxy or other organic compound.

Useful sources of phosphorus include, as non-limiting examples, any known form of phosphorus acids or oxides, phosphates and phosphites, and organic derivatives of phosphorus.

The organic solvent may be any organic liquid which is substantially immiscible with water under the

crystallization conditions employed. Non-limiting examples include alcohols, e.g. organic hydroxy compounds including alkanols of from 5 to about 10 carbon atoms, phenols and naphthols. Polar organic compounds are preferred for the organic solvents.

The organic phase of the reaction mixture comprises at least one of the sources of phosphorus, aluminum and element M components, the remaining component or components being contained in the aqueous phase.

The organic directing agent is preferably selected from the group consisting of organic mono-, di- or polyamines and onium compounds having the following formula:

$R_4E^+X^-$ or $(R_3E^+R'E^+R_3)2X^-$

wherein R or R' is alkyl of from 1 to 20 carbon atoms, heteroalkyl of from 1 to 20 carbon atoms, aryl, heteroaryl, cycloalkyl of from 3 to 6 carbon atoms, cycloheteroalkyl of from 3 to 6 carbon atoms, or combinations thereof; E is a tetracoordinate element (e.g. nitrogen, phosphorus) or a heteroatom (e.g. N, O, S, Se, P, As, etc.) in an alicyclic, heteroalicyclic or heteroaromatic structure; and X is an anion (e.g. fluoride, chloride, bromide, iodide, hydroxide, acetate, sulfate or carboxylate). When E is a heteroatom in an alicyclic, heteroalicyclic or heteroaromatic structure, such structure may be:

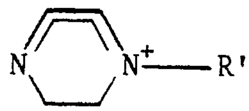, or

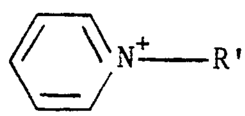

wherein R' is alkyl of from 1 to 20 carbon atoms, heteroalkyl of from 1 to 20 carbon atoms, aryl, heteroaryl, cycloalkyl of from 3 to 6 carbon atoms or cycloheteroalkyl of from 3 to 6 carbon atoms. The directing agent may appear initially in either the organic or aqueous phase of the reaction mixture.

Particularly preferred directing agents include alkylamines wherein alkyl is of 1 to 3 carbon atoms and onium compounds, above defined, wherein R is alkyl of 1 to 4 carbon atoms, R' is alkyl of 1 to 6 carbon atoms, E is nitrogen and X is halide or hydroxide. Non-limiting examples of these include di-n-propylamine, tetrapropylammonium hydroxide, tetraethylammonium hydroxide and tetrapropylammonium bromide, and hexamethyl-hexane diammonium hydroxide or bromide. An inorganic hydroxide or salt of suitable composition can also be used as directing agent, non-limiting examples of which include KOH, NaOH , CsOH , $Ca(OH)_2$, NaCl and CsBr .

In a more specific illustration of the present synthesis method, the aqueous phase contains the phosphorus and aluminum reagents, for example phosphoric acid and alumina. The organic phase with hexanol as solvent contains the element M, e.g. metal, source, such as a tetra-orthoalkoxide. The organic directing agent, e.g. tetraalkylammonium hydroxide or an amine, also acts as a surfactant to emulsify the aqueous and organic phases and optimize the interface. The element M is progressively supplied during synthesis to the gel by hydrolysis of its organic compound and transfer of the product through the interface into the aqueous phase.

As element M, aluminum and phosphorus must be available simultaneously to nucleate and crystallize metallophosphoaluminate, the rates of supply of all three elements have to be comparable. This implies that the neutralization reaction between $H_3PO_4$ and $Al_2O_3$ and the hydrolysis of the organic M compound have to be concerted Therefore, it may be important to predigest the alumina - phosphoric acid mixture. Even more important will be the element supply rate which will depend on factors such as the magnitude of the interface, temperature, pH of the aqueous phase, concentration, and nature of the organic solvent and of the M reagent.

A screening of information from numerous syntheses performed over a range of conditions shows that the metallophosphoaluminate crystallization by the present method occurs in two steps. The first step involves formation of the M-P-Al-containing gel at relatively low temperature and short time, thereby allowing for hydrolysis and transfer of M and preventing growth of aluminum phosphates. The second step involves crystallization of the metallophosphoaluminate from the gel at a higher temperature.

Because the hydrolysis and transfer rates of the element M are controlled by the magnitude of the interface, as discussed earlier, its incorporation is expected to be favored as mixing increases.

As mentioned earlier, pH is an important synthesis variable. As the formation of the metallophosphoaluminate proceeds, pH values around or above neutral (i.e. about 6 or more, up to a maximum of 9) should be maintained. As the base stability of metallophosphoaluminates is expected to be intermediate between those of aluminum phosphates and zeolites, pH values of about or slightly above 8 are preferred. Because of the major role played by the hydrolysis of the element M, e.g. metal, reagent and the necessity to control it in the present method, there is a need to have a nearly constant pH during crystallization (in particular, to avoid rapid acid hydrolysis of the M source). This can be achieved by predigestion of alumina in phosphoric acid before addition of the other reagents, which raises the initial pH of the synthesis mixture to 5-7.

To achieve and maintain higher pH values (pH = 8 or above), even after partial decomposition of the organic hydroxide, inorganic bases may be added, which can also play a role as directing agents.

The metallophosphoaluminates prepared hereby may be molecular sieves or other framework structures, in which case they will possess definite distinguishing crystalline structures which exhibit characteristic X-ray powder diffraction patterns.

Thus a germanophosphoaluminate prepared hereby, which has been designated MCM-12, is a molecular sieve which possesses a definite distinguishing crystalline structure exhibiting a characteristic X-ray powder diffraction pattern as shown in Table 1.

Table 1

| Interplanar d-Spacing (A) | Relative Intensity |
|---|---|
| 11.80 ± 0.2 | vs |
| 6.77 ± 0.05 | w |
| 5.88 ± 0.05 | m |
| 4.48 ± 0.05 | vs |
| 4.20 ± 0.05 | vs |
| 3.96 ± 0.03 | vs |
| 3.42 ± 0.03 | m |
| 3.07 ± 0.03 | w |
| 2.97 ± 0.02 | w |
| 2.59 ± 0.02 | w |

A further germanophosphoaluminate prepared hereby, which has been designated MCM-17, is molecular sieve exhibiting the characteristic X-ray diffraction pattern as shown in Table 2.

Table 2

| Interplanar d-Spacing (A) | Relative Intensity |
|---|---|
| 6.31 ± 0.1 | s-m |
| 4.47 ± 0.05 | m |
| 3.65 ± 0.03 | vs |
| 3.16 ± 0.03 | w |
| 2.83 ± 0.02 | w |
| 2.58 ± 0.02 | w |

An antimonophosphoaluminate prepared hereby, which has been designated MCM-14, is a molecular sieve which possesses a definite distinguishing crystalline structure exhibiting a characteristic X-ray powder diffraction pattern as shown in Table 3.

Table 3

| Interplanar d-Spacing (A) | Relative Intensity |
|---|---|
| 11.80 ± 0.2 | s-m |
| 6.84 ± 0.05 | w |
| 5.91 ± 0.05 | m-w |
| 4.46 ± 0.05 | s |
| 4.21 ± 0.05 | vs |
| 3.96 ± 0.03 | vs |
| 3.41 ± 0.03 | m |
| 3.07 ± 0.03 | w |
| 2.96 ± 0.02 | w |
| 2.66 ± 0.02 | w |
| 2.58 ± 0.02 | w |

A vanadophosphoaluminate prefaced hereby, which has been designated MCM-13, is a molecular sieve distinguished by a characteristic X-ray powder diffraction pattern in the as-synthesized form as shown in Table 4.

Table 4

| Interplanar d-Spacing (A) | Relative Intensity |
|---|---|
| 11.80 ± 0.2 | w |
| 7.25 ± 0.1 | w |
| 5.35 ± 0.1 | s |
| 5.20 ± 0.1 | w |
| 4.89 ± 0.1 | m |
| 4.80 ± 0.1 | m |
| 4.46 ± 0.1 | m-s |
| 4.25 ± 0.1 | vs |
| 3.90 ± 0.05 | vs |
| 3.69 ± 0.05 | m |
| 3.61 ± 0.05 | w |
| 3.04 ± 0.05 | w |
| 2.92 ± 0.03 | w |
| 2.86 ± 0.03 | m |
| 2.76 ± 0.03 | w |
| 2.65 ± 0.03 | w |
| 2.59 ± 0.03 | w |

A borophosphoaluminate prepared hereby, which has been designated MCM-15, is a molecular sieve which possesses a definite distinguishing crystalline structure exhibiting a characteristic X-ray powder diffraction pattern as shown in Table 5.

Table 5

| Interplanar d-Spacing (A) | Relative Intensity |
|---|---|
| 11.80 ± 0.2 | s |
| 6.82 ± 0.01 | w |
| 5.90 ± 0.05 | m |
| 4.47 ± 0.05 | s |
| 4.25 ± 0.05 | vs |
| 3.95 ± 0.03 | vs |
| 3.07 ± 0.03 | w |
| 2.97 ± 0.03 | w |
| 2.66 ± 0.02 | w |
| 2.59 ± 0.02 | w |

The above X-ray diffraction data were collected with a Rigaku X-ray system, using copper K-alpha radiation. The positions of the peaks, expressed in degrees 2 theta, where theta is the Bragg angle, were determined by step-scanning at 0.02 degrees of 2 theta intervals and a counting time of 1 second for each step. The interplanar spacings, d, measured in Angstrom units (A), and the relative intensities of the lines, $I/I_o$, where $I_o$ is one-hundredth of the intensity of the strongest line, including subtraction of the background, were derived with the use of a profile fitting routine. The relative intensities are given in terms of the symbols vs = very strong (75-100%), s = strong (50-74%), m = medium (25-49%) and w = weak (0-24%). The various cationic forms of particular metallophosphoaluminates reveal substantially the same pattern with some shifts in interplanar spacing and variation in relative intensity. Other variations can occur, depending on the element M to aluminum and phosphorus to aluminum ratios of the particular sample, as well as its degree of thermal treatment.

Some metallophosphoaluminates are microporous materials with a framework containing tetrahedrally coordinated (by oxygen) M, P and Al atoms. They show ion-exchange, acidic, and catalytic properties which resemble those of zeolites. Because of their different acid strength spectrum, however, they are potentially interesting as catalysts for acid-catalyzed conversions in which too high or too low an acidity may result in unwanted secondary reactions. For example, acidity associated with framework Al is brought in by replacement of phosphorus with a tetravalent non-aluminum metal. Alternately, basicity associated with framework P occurs when framework Al is replaced by the tetravalent non-aluminum metal.

The metallophosphoaluminates synthesized hereby can also be used as catalyst in intimate combination with a metal component such as silver, tungsten, vanadium, molybdenum, rhenium, chromium, manganese, or a Group VIII metal such as platinum or palladium where for example a hydrogenation-dehydrogenation or oxidation function is to be performed. Such component can be ion-exchanged into the composition, impregnated therein or intimately physically admixed therewith. Such component can be impregnated in or onto it such as for example, by, in the case of platinum, treating the crystal with a solution containing a platinum metal-containing ion. Thus, suitable platinum compounds include chloroplatinic acid, platinum chloride and various compounds containing the platinum amine complex.

The original cations or anions of the as synthesized metallophosphoaluminates can be replaced in accordance with techniques well known in the art, at least in part, by ion exchange with other cations or anions. Preferred replacing cations include metal ions, hydrogen ions, hydrogen precursor, e.g. ammonium, ions and mixtures thereof. Particularly preferred cations include hydrogen, rare earth metals and metals of Groups IIA, IIIA, IVA, IB, IIB, IIIB, IVB, VIB and VIII of the Periodic Table of the Elements.

A typical ion exchange technique would be to contact the synthetic crystalline metallophosphoaluminate with a salt of the desired replacing ion or ions. Examples of such salts of cations include the halides, e.g. chlorides, nitrates and sulfates.

The metallophosphoaluminate prepared in accordance herewith can be beneficially converted to another form by thermal treatment. This thermal treatment is generally performed by heating one of these forms at a temperature of at least 350°C for at least 1 minute and generally not longer than 20 hours. While subatmospheric pressure can be employed for the thermal treatment, atmospheric pressure is desired for reasons of convenience. The thermal treatment can be performed at a temperature up to about 1000°C. The thermally treated product is particularly useful in the catalysis of certain hydrocarbon conversion reactions.

Further, the metallophosphoaluminate, when employed either as an adsorbent, ion-exchanger or as a

catalyst in an organic compound conversion process should be dehydrated, at least partially. This can be done by heating to a temperature in the range of 200 °C to 600 °C in air or an inert atmosphere, such as nitrogen, etc. and at atmospheric, subatmospheric or superatmospheric pressures for between 30 minutes and 48 hours. Dehydration can also be performed at room temperature merely by placing the metallophosphoaluminate in a vacuum, but a longer time is required to obtain a sufficient amount of dehydration. Therefore, depending upon the degree of dehydration or thermal treatment desired for the metallophosphoaluminate, it may be subjected to heating at a temperature of from 200 °C to 1000 °C for a time of from 1 minute to 48 hours.

The crystals of the metallophosphoaluminate prepared by the instant invention can be shaped into a wide variety of particle sizes. Generally speaking, the particles can be in the form of a powder, a granule, or a molded product, such as an extrudate having a particle size sufficient to pass through a 2 mesh (Tyler) screen and be retained on a 400 mesh (Tyler) screen. In cases where the composition is molded, such as by extrusion, the crystals can be extruded before drying or partially dried and then extruded.

In the case of many catalysts, it is desirable to incorporate the metallophosphoaluminate with another material resistant to the temperatures and other conditions employed in organic conversion processes. Such materials include active and inactive material and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the metallophosphoaluminate, i.e. combined therewith, which is active, tends to improve the conversion and/or selectivity of the catalyst in certain organic conversion processes. Inactive materials suitably serve as diluents to control the amount of conversion in a given process so that products can be obtained economically and in an orderly manner without employing other means for controlling the rate of reaction. These materials may be incorporated into naturally occurring clays, e.g. bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally occurring clays which can be composited with the present metallophosphoaluminates include the montmorillonite and kaolin families which include the subbentonites, and the kaolins commonly known as Dixie, McNamee, Georgia and Florida clays or others in which the main mineral constituent is halloysite, kaolinite, dickite, nacrite, or anauxite. Such clays can be used in the raw sate as originally mined or initially subjected to calcination, acid treatment or chemical modification. Binders useful for compositng with the present crystal also include inorganic oxides, notably alumina or silica.

In addition to the foregoing materials, the metallophosphoaluminate can be composited with a porous matrix material such as aluminum phosphate, silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline metallophosphoaluminate material and inorganic oxide gel matrix vary widely, with the crystal content ranging from 1 to about 90 percent by weight and more usually, particularly when the composite is prepared in the form of beads or extrudates, in the range of 2 to 80 weight percent of the composite.

By employing catalytically active forms of the metallophosphoaluminates of this invention as catalyst components, said catalysts possibly containing additional hydrogenation components, reforming stocks can be reformed employing a temperature of from 370 °C to 540 °C, a pressure of from 790 to 7000 kPa (100 to 1000 psig), preferably from 1480 to 4930 kPa (200 to 700 psig), a liquid hourly space velocity is from 0.1 to 10, preferably from 0.5 to 4, and a hydrogen to hydrocarbon mole ratio of from 1 to 20, preferably from 4 to 12.

A catalyst comprising one or more of the present metallophosphoaluminates can also be used for hydroisomerization of normal paraffins, when provided with a hydrogenation component, e.g. platinum. Such hydroisomerization is carried out at a temperature of from 90 °C to 375 °C, preferably from 145 °C to 290 °C with a liquid hourly space velocity of from 0.01 to 2, preferably from 0.25 to 0.50, and with a hydrogen to hydrocarbon mole ratio of from 1:1 to 5:1. Additionally, such a catalyst can be used for olefin or aromatic isomerization, employing a temperature of from 200 °C to 480 °C.

Such a catalyst can also be used for reducing the pour point of gas oils. This reaction is carried out at a liquid hourly space velocity of from 10 to 30 and at a temperature of from 425 °C to 595 °C.

Other reactions which can be accomplished employing a catalyst comprising a metallophosphoaluminate of this invention containing a metal, e.g. platinum, include hydrogenation-dehydrogenation reactions and desulfurization reactions, olefin polymerization (oligomerization) and other organic

compound conversions, such as the conversion of alcohols (e.g. methanol) or ethers (e.g. dimethylether) to hydrocarbons, and the alkylation of aromatics (e.g. benzene) in the presence of an alkylating agent (e.g. ethylene).

In order to more fully illustrate the invention, the following examples are presented. In the examples, whenever adsorption data are set forth for comparison of sorptive capacities for various adsorbates, they were determined as follows:

A weighed sample of the calcined adsorbant was contacted with a flowing stream of the equilibrium vapor of the adsorbate at 25° C admixed with dry nitrogen. The adsorbates were water vapor, n-hexane, 2-methylpentane, xylene, or cyclohexane vapors. The sample temperature was maintained at 90° C for adsorbates other than ortho-xylene for which it was 120° C and water for which it was 60° C. The increase in weight measured gravimetrically was converted to the adsorption capacity of the sample in g/100g of calcined (450° C at 20° C per minute in air) adsorbant.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant = 0.016 $sec^{-1}$). In the case of zeolite HZSM-5, only 174 ppm of tetrahedrally coordinated $Al_2O_3$ are required to provide an Alpha Value of 1. The Alpha Test is described in U.S. Patent 3,3543,078 and in The Journal of Catalysis , Vol. IV, pp. 522-529 (August 1965).

When ion-exchange capacity is examined, it is determined by titrating with a solution of sulfamic acid the gaseous ammonia evolved during the temperature programmed decomposition of the ammonium-form of the silicophosphoaluminate. The method is described in Thermochimica Acta , Vol. III, pp. 113-124, 1971 by G.T. Kerr and A.W. Chester.

## Example 1

A two-phase synthesis reaction mixture was prepared with the organic phase comprised of 12g of $Ge(OC_2H_5)_4$ and 60g l-hexanol, and the aqueous phase comprised of 23.1g $H_3PO_4$ (85%), 10g $Al_2O_3$, 37g TEAOH (40%) and 71g of water. The reaction mixture as a whole had a composition including 10.8% Ge, 45% P and 44.2 Al, the percentages atomic. The directing agent in the organic phase was tetraethylammonium hydroxide.

The reaction mixture was heated at 50° C per hour to 130° C and maintained at that temperature for 24 hours. It was then heated to 180° C and maintained there for 144 hours. During this time, mixing was obtained by spinning at 800 rpm. Initial and final pH values were 6.5 and 7, respectively.

The crystalline product was separated from the reaction mixture by filtration, water washed and then dried at 80° C. The product crystalline germanophosphoaluminate had a composition including 0.1% Ge, 49.35% P, and 50.64% Al, the percentages being atomic. A sample of the as synthesized germanophosphoaluminate was then submitted for X-ray analysis. It was found to be a crystalline molecular sieve exhibiting the characteristic diffraction lines shown in Table 6.

Table 6

| Interplanar d-Spacings (A) | Observed 2 x Theta | Relative Intensities $I/I_o$ |
|---|---|---|
| 11.7908 | 7.491 | 77.43 |
| 6.8111 | 12.987 | 11.72 |
| 5.8997 | 15.004 | 32.03 |
| 4.4617 | 19.883 | 73.68 |
| 4.2249 | 21.010 | 77.79 |
| 3.9501 | 22.490 | 100.00 |
| 3.5911 | 24.772 | 6.07 |
| 3.4177 | 26.050 | 52.92 |
| 3.0678 | 29.084 | 18.00 |
| 2.9554 | 30.216 | 24.28 |
| 2.6563 | 33.714 | 7.71 |
| 2.5804 | 34.737 | 21.87 |

Example 2

A quantity of the crystalline germanophosphoaluminate of Example 1 was calcined at 450°C in air for 4 hours and then X-ray analyzed. The results are presented in Table 7.

Table 7

| Interplanar d-Spacings (A) | Observed 2 x Theta | Relative Intensities $I/I_o$ |
|---|---|---|
| 11.6198 | 7.602 | 94.26 |
| 6.7252 | 13.154 | 25.20 |
| 5.8292 | 15.187 | 10.87 |
| 4.4056 | 20.139 | 29.82 |
| 4.0399 | 21.984 | 15.05 |
| 3.9276 | 22.621 | 100.00 |
| 3.6255 | 24.533 | 5.17 |
| 3.3707 | 26.420 | 35.81 |
| 3.0865 | 28.904 | 18.65 |
| 3.0349 | 29.406 | 12.04 |
| 2.9222 | 30.567 | 22.28 |
| 2.6595 | 33.672 | 6.65 |

Example 3

A quantity of the crystalline germanophosphoaluminate of Example 1 was calcined as described in Example 2 and ammonium-exchanged using an aqueous solution of 1M $NH_4NO_3$. The ion-exchange capacity measured from the evolution of ammonia was determined to be 1.25 meq/g.

Example 4

A quantity of the ammonium exchanged MCM-12 material from Example 3 was heated on a DuPont Thermogravimetric Analyzer in an inert nitrogen atomsphere at a rate of 10°C/minute to 1000°C. The

weight loss was monitored and the evolved gases were titrated by dilute sulfamic acid. The weight vs temperature and the amount of titrant vs temperature curves were plotted, and the temperature of maximum ammonia desorption was read from the numeric data.

For comparison, a like quantity of "SAPO-5", made as described in Example 9 of U.S. 4,440,871, calcined and ammonium-exchanged in exactly the same fashion as the MCM-12 (Example 3), was also treated as above to determine the temperature of maximum ammonia desorption.

Results were:

| Material | TPAD peak, Tmax °C |
|---|---|
| MCM-12 | 109 |
| SAPO-5 | 230 |

Repeated comparisons yielded the same results.

Example 5

The product of Example 3 was examined by, Alpha Test and found to have an Alpha Value of 0.6.

Example 6

A sample of the calcined germanophosphoaluminate product of Example 3 was evaluated for sorption properties to confirm its molecular sieve nature. The results in weight percent were as follows:

hexane (90°C): 2.87%

water (60°C): 0.59%

Example 7

A two-phase synthesis reaction mixture was prepared with the organic phase composed of 12g $Ge(OC_2H_5)_4$ and 60g l-hexanol, and the aqueous phase comprised of 23.1g $H_3PO_4$ (85%), 10g $Al_2O_3$, 31g TMAOH (25%) and 70g of water. The reaction mixture as a whole had a composition including 10.8% Ti, 45% P and 44.2% Al, the percentages atomic. The directing agent was tetramethylammonium hydroxide.

The reaction mixture was heated at 50° C per hour to 130° C and maintained at that temperature for 24 hours. It was then heated to 180° C and maintained there for 144 hours. During this time, mixing was obtained by spinning at 800 rpm. The initial and final pH was 7.5.

The crystalline product was separated from the reaction mixture by filtration, water washed and then dried at 80° C. The product crystalline germanophosphoaluminate had a composition including 4.4% Ge, 50.0% P, and 45.6% Al, the percentages being atomic. A sample of the as synthesized germanophosphoaluminate was then submitted for x-ray analysis. It was found to be a crystalline molecular sieve exhibiting the diffraction lines shown in Table 8.

Table 8

| IInterplanar d-Spacings (A) | Observed 2 x Theta | Relative Intensities $I/I_o$ |
|---|---|---|
| 6.3046 | 14.036 | 48.14 |
| 4.4609 | 19.887 | 43.85 |
| 3.9898 | 22.263 | 7.52 |
| 3.6431 | 24.413 | 100.00 |
| 3.4258 | 25.988 | 68.73 |
| 3.3699 | 26.427 | 10.94 |
| 3.1550 | 28.262 | 17.00 |
| 2.8242 | 31.655 | 15.51 |
| 2.5780 | 34.769 | 22.07 |

Example 8

A quantity of the crystalline germanophosphoaluminate of Example 7 was calcined at 450 °C in air for 4 hours and then X-ray analyzed. The results are presented in Table 9.

Table 9

| Interplanar d-Spacings (A) | Observed 2 x Theta | Relative Intensities $I/I_o$ |
|---|---|---|
| 6.3051 | 14.034 | 71.43 |
| 4.4604 | 19.889 | 43.55 |
| 3.9902 | 22.261 | 6.60 |
| 2.6431 | 24.413 | 100.00 |
| 3.4255 | 25.990 | 57.80 |
| 3.1556 | 28.257 | 18.11 |
| 2.8241 | 31.656 | 17.76 |
| 2.5784 | 34.765 | 24.57 |

Example 9

A quantity of the crystalline germanophosphoaluminate of Example 7 was calcined as described in Example 8 and ammonium-exchanged using an aqueous solution of 1M $NH_4NO_3$. The product was found to have an alpha value of 0.6 and its ion-exchange capacity measured from the evolution of ammonia was determined to be 0.405 meq/g.

Example 10

The synthesis of Example 1 was repeated except that 10g $Sb(OC_2H_5)_3$ replaced the germanium reagent. Initial and final pH were 7.5. The resulting crystalline antimonophosphoaluminate product had a composition of 10.2% Sb, 47.0% P and 42.8% Al, percentages atomic and showed the characteristic diffraction pattern of Table 10.

Table 10

| Interplanar d-Spacings (A) | Observed 2 x Theta | Relative Intensities I/Io |
|---|---|---|
| 11.7773 | 7.500 | 36.84 |
| 6.8081 | 12.993 | 6.06 |
| 6.4249 | 13.771 | 14.98 |
| 5.8932 | 15.021 | 17.47 |
| 4.4565 | 19.907 | 39.72 |
| 4.2346 | 20.961 | 61.28 |
| 3.9485 | 22.499 | 56.02 |
| 3.5998 | 24.712 | 3.18 |
| 3.4047 | 26.152 | 19.91 |
| 3.2167 | 27.710 | 100.00 |
| 3.0683 | 29.078 | 10.12 |
| 2.9517 | 30.254 | 14.99 |
| 2.7879 | 32.079 | 41.42 |
| 2.6560 | 33.717 | 5.29 |
| 2.5752 | 34.809 | 13.39 |

Example 11

A quantity of the crystalline antimonophosphoaluminate of Example 10 was calcined at 450 °C in air for 4 hours and then X-ray analyzed. The results are presented in Table 11.

Table 11

| Interplanar d-Spacings (A) | Observed 2 x Theta | Relative Intensities I/Io |
|---|---|---|
| 11.8868 | 7.431 | 17.87 |
| 4.3356 | 20.468 | 31.16 |
| 4.1185 | 21.559 | 100.00 |
| 3.9570 | 22.450 | 21.24 |
| 3.4380 | 25.894 | 25.40 |
| 3.0728 | 29.035 | 64.02 |
| 2.9475 | 30.299 | 21.98 |
| 2.6532 | 33.755 | 13.83 |

Example 12

A quantity of the crystalline antimonophosphoaluminate of Example 10 was calcined as described in Example 11 and ammonium-exchanged using an aqueous solution of 1M $NH_4NO_3$. The ion-exchange capacity measured from the evolution of ammonia was determined to be 1.3 meq/g.

Example 13

A quantity of the ammonium exchanged antimonophosphoaluminate MCM-14 material from Example 12 was subjected to the thermogravimetric test in Example 4 and the results obtained were as follows:

| Material | TPAD peak, Tmax°C |
|---|---|
| MCM-14 | 180 |
| SAPO-5 | 230 |

Repeated comparisons yielded the same results.

Example 14

The product of Example 12 was examined by the Alpha Test and found to have an Alpha Value of 0.6.

Example 15

A sample of the calcined product antimonophosphoaluminate of Example 12 was evaluated for sorption properties to confirm its molecular sieve nature. The results in weight percent were as follows:

hexane (90°C): 0.60%
water (60°C): 3.28%

Example 16

The synthesis of Example 1 was repeated except that 7.0g $B(OC_2H_5)_3$ replaced the germanium reagent. Initial and final pH was 7. The resulting product crystalline borophosphoaluminate had a composition of 0.1% B, 49.7% P and 50.2% Al, percentages atomic and showed the X-ray diffraction pattern of Table 12.

Table 12

| Interplanar d-Spacings (A) | Observed 2 x Theta | Relative Intensities $I/I_o$ |
|---|---|---|
| 11.7017 | 7.549 | 69.43 |
| 6.7721 | 13.062 | 12.02 |
| 5.8747 | 15.068 | 27.61 |
| 4.4422 | 19.971 | 55.76 |
| 4.2632 | 20.819 | 62.63 |
| 4.1992 | 21.140 | 100.00 |
| 3.9345 | 22.580 | 95.21 |
| 3.6375 | 24.451 | 7.40 |
| 3.5738 | 24.894 | 6.75 |
| 3.1480 | 28.327 | 3.87 |
| 3.0559 | 29.199 | 19.67 |
| 2.9492 | 30.281 | 17.97 |
| 2.6463 | 33.846 | 6.42 |
| 2.5746 | 34.817 | 14.01 |

Example 17

A quantity of the crystalline borophosphoaluminate of Example 16 was calcined at 450°C in air for 4 hours and then X-ray analyzed. The results are presented in Table 13.

Table 13

| Interplanar d-Spacings (A) | Observed 2 x Theta | Relative Intensities $I/I_o$ |
|---|---|---|
| 11.8989 | 7.423 | 100.00 |
| 6.8705 | 12.874 | 19.45 |
| 6.9525 | 14.871 | 7.75 |
| 4.5020 | 19.703 | 32.93 |
| 4.1819 | 21.228 | 48.75 |
| 3.9619 | 22.422 | 59.25 |
| 3.4390 | 25.886 | 7.78 |
| 3.0715 | 29.048 | 11.61 |
| 2.9808 | 29.952 | 15.36 |
| 2.6591 | 33.677 | 5.08 |
| 2.6015 | 34.446 | 14.22 |

Example 18

A quantity of the crystalline borophosphoaluminate of Example 16 was calcined as described in Example 17 and ammonium-exchanged using an aqueous solution of 1M $NH_4NO_3$. The ion-exchange capacity measured from the evolution of ammonia was determined to be 0.257 meq/g.

Example 19

The product of Example 18 was examined by the Alpha Test and found to have an Alpha Value of 0.2.

Example 20

A sample of the calcined product borophosphoaluminate of Example 18 was evaluated for sorption properties to confirm its molecular sieve nature. The results in weight percent were as follows:

hexane (90°C): 1.31%

water (60°C): 0.42%

Example 21

The ammonium exchanged MCM-15 product of Example 18 was subjected to the thermogravimetric analysis of Example 4 and the temperature of maximum ammonia desorption was found to be 150°C.

Example 22

The synthesis of Example 1 was repeated except that 12.0g $VO(OC_3H_7)_3$ replaced the germanium reagent. Initial pH was 6.5 and the final pH was 7.5. The resulting product crystalline vanadophosphoaluminate had a composition of 1.2% V, 52.9% P and 45.9% Al, percentages atomic, and the X-ray diffraction pattern listed in Table 14.

Table 14

| Interplanar d-Spacings (A) | Observed 2 x Theta | Relative Intensities $I/I_o$ |
|---|---|---|
| 11.7702 | 7.505 | 9.29 |
| 7.2493 | 12.199 | 11.97 |
| 5.3449 | 16.572 | 75.01 |
| 5.2002 | 17.037 | 13.68 |
| 4.8924 | 18.117 | 27.65 |
| 4.7983 | 18.475 | 33.93 |
| 4.4613 | 19.885 | 4.81 |

Table 14 (continued)

| Interplanar d-Spacings (A) | Observed 2 x Theta | Relative Intensities $I/I_o$ |
|---|---|---|
| 4.2583 | 20.843 | 83.28 |
| 3.9109 | 22.718 | 100.00 |
| 3.6903 | 24.096 | 41.45 |
| 3.6184 | 24.582 | 21.75 |
| 3.4359 | 25.910 | 8.49 |
| 3.3905 | 26.263 | 9.63 |
| 3.2255 | 27.632 | 6.04 |
| 3.1834 | 28.006 | 9.53 |
| 3.0399 | 29.356 | 91.57 |
| 2.9122 | 30.675 | 56.41 |
| 2.8673 | 31.167 | 52.72 |
| 2.7598 | 32.413 | 17.96 |
| 2.6364 | 33.976 | 15.36 |
| 2.5745 | 34.819 | 15.88 |

Example 23

A quantity of the crystalline vanadophosphoaluminate of Example 22 was calcined at 450° C in air for 4 hours and then X-ray analyzed. The results are presented in Table 15.

Table 15

| Interplanar d-Spacings (A) | Observed 2 x Theta | Relative Intensities $I/I_o$ |
|---|---|---|
| 11.8727 | 7.440 | 8.79 |
| 5.1882 | 17.076 | 35.68 |
| 4.3101 | 20.590 | 100.00 |
| 4.0891 | 21.716 | 78.26 |
| 3.9491 | 22.495 | 30.56 |
| 3.8573 | 23.038 | 15.57 |
| 3.5869 | 24.801 | 45.72 |
| 3.0458 | 29.298 | 16.01 |
| 2.9156 | 30.638 | 9.63 |
| 2.8746 | 31.086 | 5.13 |
| 2.6258 | 34.117 | 4.44 |

Example 24

A quantity of MCM-13 product from Example 22 was calcined as in Example 23 and ammonium-exchanged using an aqueous solution of 1M $NH_4NO_3$. The ion-exchange capacity measured from the evolution of ammonia was determined to be 0.79 meq/g.

Example 25

A quantity of the ammonium-exchanged MCM-13 material from Example 24 was heated on a DuPont Thermogravimetric Analyzer in an inert nitrogen atmosphere at a rate of 10°C/minute to 1000°C. The weight loss was monitored and the evolved gases were titrated by dilute sulfamic acid. The weight vs temperature and the amount of titrant vs temperature curves were plotted, and the temperature of maximum ammonia desorption was read from the numeric data. For comparison, a like quantity of "SAPO-5", made as described in Example 9 of U.S. 4,440,871, calcined and ammonium-exchanged in exactly the same fashion as the MCM-13 (Example 3), was also treated as above to determine the temperature of maximum ammonia desorption. Results were:

| Material | TPAD peak, Tmax °C |
|---|---|
| MCM-13 | 182 |
| SAPO-5 | 230 |

Repeated comparisons yielded the same results.

Example 26

The product of Example 24 was examined by the Alpha Test and found to have an Alpha Value of 0.2.

**Claims**

1. A crystalline metallophosphoaluminate having a composition, in the anhydrous state, as follows:

$$Q^{q+}_{i/q}:(AlO_2^-)_{1-x}:(PO_2^+)_{1-y}:(MO_2^{m-4})_{x+y}:T^{t-}_{j/t}$$

wherein Q is a cation of valence q, T is an anion of valence t and M is one or more elements other than aluminum or phosphorus of valence m selected from germanium, vanadium, antimony and boron or is a combination of said one or more elements and silicon, and x, y, i and j are numbers which satisfy the relationship:

i-j = y-x + (4-m)(x+y),

said metallophosphoaluminate having an ion exchange capacity of at least 0.002 meq/g.

2. The metallophosphoaluminate of Claim 1 which comprises a composition, in the anhydrous state, as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein A is an organic and v is the number of moles of A.

3. The metallophosphoaluminate of Claim 1 wherein the element M is germanium and having the characteristic X-ray diffraction pattern given in Table 1.

4. The metallophosphoaluminate of Claim 1 wherein the element M is germanium and having the characteristic X-ray diffraction pattern given in Table 2.

5. The metallophosphoaluminate of Claim 1 wherein the element M is antimony and having the characteristic X-ray diffraction pattern given in Table 3.

6. The metallophosphoaluminate of Claim 1 wherein the element M is vanadium and having the characteristic X-ray diffraction pattern given in Table 4.

7. The metallophosphoaluminate of Claim 1 wherein the element M is boron and having the characteristic X-ray diffraction pattern given in Table 5.

8. A method for synthesis of crystalline metallophosphoaluminate characterized by a composition, in the anhydrous state, as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein A is organic, v is the number of moles of A, Q is a cation of valence q, T is an anion of valence t and M is one or more elements other than aluminum or phosphorus of valence m selected from germanium, vanadium, antimony and boron, or is a combination of said one or more elements and silicon, and x, y, i and j are numbers which satisfy the relationship:

i-j = y-x + (4-m)(x+y),

said metallophosphoaluminate having an ion exchange capacity of at least 0.002 meq/g, which comprises:

preparing a reaction mixture comprising a liquid organic phase and a liquid aqueous phase, said reaction mixture comprising components in the following relationship:

$(A)_a:(Q_{2/q}O)_b:(Al_2O_3)_c:(P_2O_5)_d:(MO_{m/2})_e:(solvent)_f:(anion\ source)_g:(H_2O)_h$

wherein a, b, c, d, e, f, g and h are numbers satisfying the following relationships:

a/(c+d+e) is less than 4,

b/(c+d+e) is less than 2,

e/(c+d) is less than 2,

f/(c+d+e) is from 0.1 to 15,

g/(c+d+e) is less than 2, and

h/(c+d+e) is from 3 to 150, wherein the solvent is a substantially water-immiscible organic solvent and wherein upon initial preparation of said reaction mixture the source of one of the $Al_2O_3$, $P_2O_5$ and $MO_{m/2}$ is dispersed or dissolved in the organic phase.

heating the reaction mixture at a rate of from about 5 ° C to 200 ° C per hour to a temperature of from 80 ° C to 300 ° C,
agitating the reaction mixture so as to intimately admix the organic and aqueous phases,
maintaining the reaction mixture at a temperature of from 80 ° C to 300 ° C and a pH of from 2 to 9, and
recovering the metallophosphoaluminate.

**9.** The method of Claim 8 including the further step of heating the metallophosphoaluminate product to remove the material A.

**10.** The method of Claim 8 or Claim 9 wherein the organic directing agent is an organic mono, di- or polyamines and onium compounds having the following formula:
$R_4E^+X^-$ or $(R_3E^+R'E^+R_3)2X^-$
wherein R or R' is alkyl of from 1 to 20 carbon atoms, heteroalkyl of from 1 to 20 carbon atoms, aryl, heteroaryl, cycloalkyl of from 3 to 6 carbon atoms, cycloheteroalkyl of from 3 to 6 carbon atoms, or combinations thereof; E is a tetracoordinate element or a heteroatom in an alicyclic, heteroalicyclic or heteroaromatic structure; and X is an anion.

**11.** A process for converting an organic compound which comprises contacting said organic compound at conversion conditions with a catalyst comprising a metallophosphoaluminate of Claim 1.

**12.** A process for converting an organic compound which comprises contacting the organic compound at conversion conditions with a catalyst comprising a metallophosphoaluminate produced by the process of Claim 9.

## Revendications

**1.** Un métallophosphoaluminate cristallin présentant, à l'état anhydre, la composition suivante:

$$Q^{q+}_{i/q}/(AlO_2^-)_{1-x}/(PO_2^+)_{1-y}/(MO_2^{m-4})_{x+y}/T^{t-}_{j/t}$$

dans laquelle: Q représente un cation de valence q; T représente un anion de valence t; et M représente un ou plusieurs éléments, de valence m, différents de l'aluminium ou du phosphore et choisis parmi le germanium, le vanadium, l'antimoine ou le bore, ou une combinaison d'un ou plusieurs de ces éléments et du silicium; et x, y, i et j sont des nombres qui satisfont à la relation:
$i-j = y-x + (4-m)(x+y)$
ce métallophosphoaluminate présentant une capacité d'échange d'ions d'au moins 0,002 méq/g.

**2.** Le métallophosphoaluminate selon la revendication 1, qui comprend, à l'état anhydre, la composition suivante:

$$A_v/Q^{q+}_{i/q}/(AlO_2^-)_{1-x}/(PO_2^+)_{1-y}/(MO_2^{m-4})_{x+y}/T^{t-}_{j/t}$$

dans laquelle: A est un radical organique; et
Y est le nombre de moles de A.

**3.** Le métallophosphoaluminate selon la revendication 1, dans lequel l'élément M est le germanium et qui présente le schéma de diffraction aux rayons X caractéristique donné dans le tableau 1.

**4.** Le métallophosphoaluminate selon la revendication 1, dans lequel l'élément M est le germanium et qui présente le schéma de diffraction aux rayons X caractéristique donné dans le tableau 2.

**5.** Le métallophosphoaluminate selon la revendication 1, dans lequel l'élément M est l'antimoine et qui présente le schéma de diffraction aux rayons X caractéristique donné dans le tableau 3.

6. le métallophosphoaluminate selon la revendication 1, dans lequel l'élément M est le vanadium et qui présente le schéma de diffraction aux rayons X caractéristique donné dans le tableau 4.

7. Le métallophosphoaluminate selon la revendication 1, dans lequel l'élément M est le bore et qui présente le schéma de diffraction aux rayons X caractéristique donné dans le tableau 5.

8. Un procédé de synthèse du métallophosphoaluminate cristallin caractérisé par une composition, à l'état anhydre, comme suit.

$$A_v/Q^{q+}_{i/q}/(AlO_2^-)_{1-x}/(PO_2^+)_{1-y}/(MO_2^{m-4})_{x+y}/T^{t-}_{j/t}$$

dans laquelle:
A représente un radical organique;
V est le nombre de moles de A;
Q représente un cation de valence q;
T représente un anion de valence t; et
M représente un ou plusieurs éléments, de valence m,
différents de l'aluminium ou du phosphore choisis parmi le germanium, le vanadium, l'antimoine et le bore, ou représente une combinaison d'un ou plusieurs de ces éléments et du silicium; et x, y, i et j sont des nombres qui satisfont à la relation:

$i\text{-}j = y\text{-}x + (4\text{-}m)(x+y)$

ce métallophosphoaluminate présentant une capacité d'échange d'ions d'au moins 0,002 méq/g, ledit procédé comprenant:

- la préparation d'un mélange réactionnel comprenant une phase organique liquide et une phase aqueuse liquide, lequel mélange réactionnel comprend les composants dans les proportions suivantes:

$$(A)_a/(Q_{2/q}O)_b/(Al_2O_3)_c/(P_2O_5)_d/(MO_{m/2})_e/(\text{solvant})_f/(\text{source d'anion})_g/(H_2O)_h$$

  dans laquelle:
  a, b, c, d, e, f, g et h sont des nombres satisfaisant les relations suivantes:

  a/(c+d+e) est inférieur à 4;
  b/(c+d+e) est inférieur à 2;
  e/(c+d) est inférieur à 2;
  f/(c+d+e) est compris entre 0,1 et 15;
  g/(c+d+e) est inférieur à 2;
  h/(c+d+e) est compris entre 3 et 150; dans laquelle le solvant est un solvant organique quasiment non miscible à l'eau et dans laquelle, au cours de la préparation initiale dudit mélange de réaction, la source d'un des produits parmi $Al_2O_3$, $P_2O_5$ et $MO_{m/2}$ est dispersée ou dissoute dans la phase organique;
- le chauffage du milieu réactionnel à une vitesse comprise entre 5° C et 200° C par heure, à une température comprise entre 80° C et 300° C;
- l'agitation du milieu réactionnel afin de mélanger intimement les phases organique et aqueuse;
- le maintien du milieu réactionnel à une température comprise entre 80° C et 300° C et à un pH compris entre 2 et 9; et
- la récupération du métallophosphoaluminate.

9. Le procédé selon la revendication 8, comprenant l'étape ultérieure de chauffage du produit métallophosphoaluminate pour éliminer le produit A.

10. Le procédé selon la revendication 8 ou 9, dans lequel l'agent organique directeur représente un dérivé mono-, di- ou poly-amine et onium organiques présentant la formule suivante:

$R_4E^+X^-$ cu $(R_3E^+R'E^+R_3)2X^-$

dans laquelle:

R ou R' représente un groupement alkyle comprenant de 1 a 20 atomes de carbone, un groupement hétéroalkyle comprenant de 1 à 20 atomes de carbone, un groupement aryle, un groupe hétéroaryle, un groupement cycloalkyle comprenant de 3 à 6 atomes de carbone, un groupement cyclohétéroalkyle comprenant de 3 à 6 atomes de carbone, ou une combinaison de ceux-ci;
E représente un élément tétracoordonné ou un hétéroatome dans une structure alicyclique, hétéroalicyclique ou hétéroaromatique; et
X représente un anion.

**11.** Un procédé de conversion d'un dérivé organique qui comprend la mise en contact de ce dérivé organique dans des conditions de conversion avec un catalyseur comprenant un métallophosphoaluminate selon la revendication 1.

**12.** Un procédé de conversion d'un dérivé organique qui comprend la mise en contact de ce dérivé organique dans des conditions de conversion avec un catalyseur comprenant un métallophosphoaluminate produit par le procédé selon la revendication 9.

## Ansprüche

**1.** Kristallines Metallphosphoaluminat, das im wasserfreien Zustand folgende Zusammensetzung aufweist:

$$Q^{q+}_{i/q}:(AlO_2^-)_{1-x}:(PO_2^+)_{1-y}:(MO_2^{m-4})_{x+y}:T^{t-}_{j/t}$$

worin Q ein Kation der Wertigkeit q ist, T ein Anion der Wertigkeit t ist und M ein oder mehrere Elemente außer Aluminium oder Phosphor der Wertigkeit m, das aus Germanium, Vanadium, Antimon und Bor ausgewählt ist, oder eine Kombination dieses einen oder dieser mehreren Elemente und Silicium ist, und x, y, i und j Zahlen sind, die das Verhältnis:
i-j = y-x + (4-m) (x+y) erfüllen, wobei das Metallphosphoaluminat eine Ionenaustauschkapazität von mindestens 0,002 mÄqu./g aufweist.

**2.** Metallphosphoaluminat nach Anspruch 1, das im wasserfreien Zustand die folgende Zusammensetzung aufweist:

$$A_v:Q^{q+}_{i/q}:(AlO_2^-)_{1-x}:(PO_2^+)_{1-y}:(MO_2^{m-4})_{x+y}:T^{t-}_{j/t}$$

worin A ein anorganisches und v die Anzahl der Mole von A ist.

**3.** Metallphosphoaluminat nach Anspruch 1, worin das Element M Germanium ist und das das in Tabelle 1 angegebene charakteristische Röntgenbeugungsdiagramm aufweist.

**4.** Metallphosphoaluminat nach Anspruch 1, worin das Element M Germanium ist und das das in Tabelle 2 angegebene charakteristische Röntgenbeugungsdiagramm aufweist.

**5.** Metallphosphoaluminat nach Anspruch 1, worin das Element M Antimon ist und das das in Tabelle 3 angegebene charakteristische Röntgenbeugungsdiagramm aufweist.

**6.** Metallphosphoaluminat nach Anspruch 1, worin das Element M Vanadium ist und das das in Tabelle 4 angegebene charakteristische Röntgenbeugungsdiagramm aufweist.

**7.** Metallphosphoaluminat nach Anspruch 1, worin das Element M Bor ist und das das in Tabelle 5 angegebene charakteristische Röntgenbeugungsdiagramm aufweist.

**8.** Verfahren zur Synthese des kristallinen Metallphosphoaluminats, das im wasserfreien Zustand durch die folgende Zusammensetzung gekennzeichnet wird:
worin A ein anorganisches, v die Anzahl der Mole von A ist, Q ein Kation der Wertigkeit Q ist, T ein Anion der Wertigkeit t ist und M ein oder mehrere Elemente außer Aluminium oder Phosphor der

Wertigkeit m, das aus Germanium, Vanadium, Antimon und Bor ausgewählt ist, oder eine Kombination dieses einen oder dieser mehreren Elemente und Silicium ist, und x, y, 1 und j Zahlen sind, die das Verhältnis:

i-j = y-x + (4-m)(x+y) erfüllen, wobei das Metallphosphoaluminat eine Ionenaustauschkapazität von mindesten 0,002 mÄqu./g aufweist, welches umfaßt:

Herstellung einer Reaktionsmischung, die eine flüssige organische Phase und eine flüssige wässrige Phase umfaßt, wobei diese Reaktionsmischung die Komponenten im folgenden Verhältnis umfaßt:

$$(A)_a:(Q_{2/q}O)_b:(Al_2O_3)_c:(P_2O_5)_d:(MO_{m/2})_e:(\text{Lösungsmittel})_f:(\text{Anionenquelle})_g:(H_2O)_h$$

worin a, b, c, d, e, f, g und h Zahlen sind, die die folgenden Verhältnisse erfüllen:

a/(c+d+e) ist kleiner als 4,
b/(c+d+e) ist kleiner als 2,
e/(c+d) ist kleiner als 2,
f/(c+d+e) beträgt von o,1 bis 15
g/(c+d+e) ist kleiner als 2, und
h/(c+d+e) beträgt von 3 bis 150, worin das Lösungsmittel ein im wesentlichen mit Wasser nicht mischbares organisches Lösungsmittel ist, und worin bei der ursprünglichen Herstellung der Reaktionsmischung die Quelle eines der $Al_2O_3$, $P_2O_5$ und $MO_{m/2}$ in der organischen Phase dispergiert oder gelöst wird, Erwärmen der Reaktionsmischung bei einer Geschwindigkeit von etwa 5 °C bis 200 °C pro Stunde auf eine Temperatur von 80 °C bis 300 °C, Rühren der Reaktionsmischung, um die organische und die wässrige Phase unmittelbar miteinander zu vermischen, Halten der Reaktionsmischung bei einer Temperatur von 80 °C bis 300 °C und einem pH-Wert von 2 bis 9 und Gewinnung des Metallphosphoaluminats.

**9.** Verfahren nach Anspruch 8, das den weiteren Schritt der Erwärmung des Metallphosphoaluminatproduktes umfaßt, um das Material A zu entfernen.

**10.** Verfahren nach Anspruch 8 oder 9, worin das organische Leitmittel organische Mono-, Di- oder Polyamine und - oniumverbindungen mit der folgenden Formel ist:

$R_4E^+X^-$ oder $(R_3E^+R'E^+R_3)2X^-$

worin R oder R' eine Alkyl von 1 bis 20 Kohlenstoffatomen, ein Heteroalkyl von 1 bis 20 Kohlenstoffatomen, Aryl, Heteroaryl, ein Cycloalkyl von 3 bis 6 Kohlenstoffatomen, ein Cycloheteroalkyl von 3 bis 6 Kohlenstoffatomen oder Kombinationen davon sind, E ein vierfach kombiniertes Element oder ein Heteroatom in alicyclischer, heteroalicyclischer oder heteroaromatischer Struktur ist und X ein Anion ist.

**11.** Verfahren zur Umwandlung einer organischen Verbindung, welches den Kontakt der organischen Verbindung bei Umwandlungsbedingungen mit einem Katalysator umfaßt, der das Metallphosphoaluminat nach Anspruch 1 umfaßt.

**12.** Verfahren zur Umwandlung einer organischen Verbindung, das den Kontakt der organischen der organischen Verbindung bei Umwandlungsbedingungen mit einem Katalysator umfaßt, der ein Metallphosphoaluminat umfaßt, das nach dem Verfahren nach Anspruch 9 hergestellt wurde.